# EUROPEAN PATENT APPLICATION

(11) **EP 1 914 210 A1**
(43) Date of publication of application: **23.04.2008**
(21) Application number: 06782448.2
(22) Date of filing: 07.08.2006
(51) Int. Cl.: C03C 17/30, B32B 9/00, C03C 17/42, C09D 183/00, C09D 183/04, C09K 3/00

(54) **WATER-REPELLENT COATING CLAD ARTICLE AND PROCESS FOR PRODUCING THE SAME**

(30) Priority: 08.08.2005 JP 2005229300
(71) Applicant: Nippon Sheet Glass Company Limited, Minato-ku Tokyo 1058552 (JP)
(72) Inventor: TERANISHI, Toyoyuki, Tokyo, 105-8552 (JP)
(74) Representative: Gille Hrabal Struck Neidlein Prop Roos
(86) International application number: PCT/JP2006/315606
(87) International publication number: WO 2007/018184

(57) **Abstract**

The present invention relates to a water-repellent film coated article comprising a base material and a water-repellent film formed on a surface of the base material, wherein the water-repellent film is made mainly of silicon oxide and has an arithmetic mean roughness (Ra) of more than 0.5 nm but not more than 3.0 nm (0.5 nm < Ra ≤ 3.0 nm) as measured on a surface thereof. The water-repellent film coated article is excellent in water repellency and durability, and exhibits an excellent wiper operating characteristic on the surface thereof to thereby prevent occurrence of judder.

## Description

### TECHNICAL FIELD

The present invention relates to water-repellent film coated articles obtained by forming a water-repellent film on a surface of a glass base material, and a process for producing the water-repellent film coated articles.

### BACKGROUND ART

When using a water-repellent glass as a windshield or a rear glass of automobiles, an operation of a wiper on the water-repellent glass tends to be deteriorated as compared to that on an ordinary glass, resulting in occurrence of a large pulsation (judder) upon sliding motion of the wiper. The reason therefor is considered as follows. That is, when the ordinary glass is wetted with a falling rain, a uniform water film is formed between the wiper and the glass and acts as a lubricant (fluid lubrication) to lower a friction force therebetween as a whole. On the other hand, the water film is hardly formed between the wiper and the water-repellent glass so that a friction force therebetween is not reduced on a part of the glass, resulting in poor operability of the wiper on the water-repellent glass as compared to the operability on the ordinary glass.
There have been proposed various methods for improving the operability of the wiper on the surface of the water-repellent glass. In one of these methods, it has been attempted to improve an operability of a wiper on a water-repellent glass by forming a film having a function of decreasing a friction coefficient on a wiper rubber. More specifically, there has been proposed the method of coating a wiper rubber with a Teflon resin or a nylon resin to form a film made of these resins thereon (refer to claims of Patent Document 1), the wiper apparatus having a mechanism for varying a pressing force of a wiper rubber against a surface of a glass (refer to claims of Patent Document 2), etc. However, merely these improvements concerning the wiper rubber have presently failed to completely prevent occurrence of judder of the wiper on the water-repellent glass. Therefore, there is a demand for improving a water-repellent film formed on a surface of the water-repellent glass.

Also, it is generally known that a water-repellent film made of a silicone-based component has a lower friction coefficient than that of a film made of a fluorine-based component. Therefore, for the purpose of inhibiting occurrence of judder of a wiper upon sliding motion of the wiper on a glass, there has been proposed the method of forming a water-repellent film thereon by using a coating solution prepared by mixing a specific alkoxyl group-terminated dimethyl silicone and a specific fluoroalkylsilane in a silica sol matrix (refer to claims of Patent Document 3). The water-repellent material is a two-component system composed of dimethyl silicone and fluoroalkylsilane, and serves for improving an operability of the wiper by the effect of dimethyl silicone. Although the operability of the wiper is enhanced by using the silicone-containing system, only the system is unsatisfactory to completely prevent occurrence of judder of the wiper upon sliding motion thereof. In addition, the dimethyl silicone tends to be deteriorated during use because of poor durability such as low abrasion resistance and poor weather resistance, so that the obtained film tends to exhibit a short life, resulting in such a problem that the operability of the wiper thereon is gradually deteriorated.
To solve the above problems, the present inventors have proposed the water-repellent film coated articles having an excellent water repellency (refer to Patent Documents 4, 5 and 6). However, there is a demand for further improving these water-repellent film coated articles to prevent occurrence of judder between the articles and a wiper rubber.

Patent Document 1: JP 6-262943A
Patent Document 2: JP 8-268234A
Patent Document 3: JP 2004-306010A
Patent Document 4: JP 3334611
Patent Document 5: JP 3427755
Patent Document 6: PCT Pamphlet WO 99/63022

### DISCLOSURE OF THE INVENTION

In view of the above conventional problems, an object of the present invention is to provide a water-repellent film coated article having excellent water repellency and durability which allows a wiper to exhibit an excellent operability on a surface of a film formed thereon and can prevent occurrence of judder between the wiper and the film, as well as a process for producing the water-repellent film coated article with an excellent productivity substantially without requiring any baking step.

As a result of extensive and intensive researches for achieving the above object, the inventors have found that both a life of the water-repellent film and an operability of the wiper thereon can be improved by the water-repellent film coated article obtained by forming a water-repellent film on a base material in which the arithmetic mean roughness (Ra) on a surface of the water-repellent film and further the dynamic coefficient of friction thereof are respectively controlled to specific ranges, thereby solving the above conventional problems. The present invention has been accomplished on the basis of the above finding.

Thus, the present invention provides the following aspects:
(1) A water-repellent film coated article comprising a base material and a water-repellent film formed on a surface of the base material,
   wherein the water-repellent film is made mainly of silicon oxide and has an arithmetic mean roughness (Ra) of more than 0.5 nm but not more than 3.0 nm (0.5 nm < Ra ≤ 3.0 nm) as measured on a surface thereof;
(2) the water-repellent film coated article as described in the above aspect (1), wherein a dynamic coefficient of friction between the surface of the water-repellent film and a wiper rubber under a dried condition is 0.5 or less when allowing the wiper rubber to move at a velocity of 50 cm/min on the surface of the water-repellent film while contacting therewith;
(3) the water-repellent film coated article as described in the above aspect (1) or (2), wherein an absolute value of a difference between the dynamic coefficient of friction between the surface of the water-repellent film and the wiper rubber under a dried condition and that under a wetted condition is 0.1 or less when allowing the wiper rubber to move at a velocity of 50 cm/min on the surface of the water-repellent film while contacting therewith;
(4) the water-repellent film coated article as described in any one of the above aspects (1) to (3), wherein the water-repellent film contains an organosilane;
(5) the water-repellent film coated article as described in any one of the above aspects (1) to (4), wherein the water-repellent film contains a fluoroalkyl group-containing compound;
(6) the water-repellent film coated article as described in the above aspect (5), wherein a concentration of fluorine in the surface of the water-repellent film is 0.8 or more in terms of an atomic ratio of fluorine atom to silicon atom therein;
(7) the water-repellent film coated article as described in the above aspect (5) or (6), wherein the water-repellent film is formed by applying a coating solution comprising (A) 0.01 to 2% by mass (in terms of silica) of silicon alkoxide and/or a hydrolyzate thereof, (B) 0.00001 to 0.15% by mass (in terms of silica) of a fluoroalkyl group-containing silane compound, (C) 0.001 to 3 N of an acid and (D) 0 to 20% by mass of water, onto the surface of the base material, and then drying the applied coating solution;
(8) the water-repellent film coated article as described in the above aspect (5) or (6), wherein the water-repellent film is formed by applying a coating solution prepared by dissolving (E) a chlorosilyl group-containing compound and (B) a fluoroalkyl group-containing silane compound in a solvent containing (F) alcohol and/or water to replace a chloro group of the chlorosilyl group-containing compound with an alkoxyl group or a hydroxyl group, onto the surface of the base material, and then drying the applied coating solution;
(9) the water-repellent film coated article as described in any one of the above aspects (4) to (6), wherein the water-repellent film comprises an undercoat layer formed by applying an undercoat layer coating solution containing (A) 0.01 to 3% by mass (in terms of silica) of silicon alkoxide and/or a hydrolyzate thereof, (C) 0.001 to 1 N of an acid and (D) 0 to 10% by mass of water, on the surface of the base material and then drying the applied undercoat layer coating solution, and a water-repellent layer formed by applying a water-repellent layer coating solution containing a fluoroalkyl group- and/or a hydrolyzable group-containing organosilane, onto a surface of the undercoat layer and then drying the applied water-repellent layer coating solution;
(10) the water-repellent film coated article as described in any one of the above aspects (5) to (9), wherein the water-repellent film comprises the undercoat layer made mainly of silicon oxide and the water-repellent layer containing the fluoroalkyl group-containing silane;
(11) the water-repellent film coated article as described in any one of the above aspects (4) to (9), wherein the water-repellent film comprises the undercoat layer made mainly of silicon oxide and the water-repellent layer containing the hydrolyzable group-containing organosilane;
(12) the water-repellent film coated article as described in the above aspect (10) or (11), wherein the water-repellent layer is coupled to the undercoat layer;
(13) a process for producing a water-repellent film coated article comprising the steps of:
   applying a coating solution comprising (A) 0.01 to 2% by mass (in terms of silica) of silicon alkoxide and/or a hydrolyzate thereof, (B) 0.00001 to 0.15% by mass (in terms of silica) of a fluoroalkyl group containing silane compound, (C) 0.001 to 3 N of an acid and (D) 0 to 20% by mass of water, or a coating solution prepared by dissolving (E) a chlorosilyl group-containing compound and (B) the fluoroalkyl group containing silane compound in a solvent containing (F) alcohol and/or water to replace a chloro group of the chlorosilyl group-containing compound with an alkoxyl group or a hydroxyl group, onto a base material at a temperature of from 10 to 40°C and an absolute humidity of from 4.5 x 10⁻³ to 18 x 10⁻³ kg/kg (DA); and
   drying the applied coating solution at a temperature of from 10 to 40°C and an absolute humidity of from 4.5 x 10⁻³ to 18 x 10⁻³ kg/kg (DA); and
(14) a process for producing a water-repellent film coated article comprising the steps of:
   applying an undercoat layer coating solution containing (A) 0.01 to 3% by mass (in terms of silica) of silicon alkoxide and/or a hydrolyzate thereof, (C) 0.001 to 1 N of an acid and (D) 0 to 10% by mass of water, on a base material at a temperature of from 10 to 40°C and an absolute humidity of from 4.5 x 10⁻³ to 18 x 10⁻³ kg/kg (DA); and
   drying the applied undercoat layer coating solution at a temperature of from 10 to 40°C and an absolute humidity of from 4.5 x 10⁻³ to 18 x 10⁻³ kg/kg (DA) to form an undercoat layer.

In accordance with the present invention, it is possible to obtain a water-repellent film coated article that is excellent in water repellency and durability as well as an operability of a wiper on a film formed thereon, and is free from occurrence of judder of the wiper thereon, and further the water-repellent film coated article can be produced with an excellent productivity.

### BRIEF DESCRIPTION OF THE DRAWINGS

Fig. 1 is a schematic view showing a method of measuring a dynamic coefficient of friction (flat glass plate).
Fig. 2 is a graph showing a relationship between a surface roughness (Ra) and a tumbling angle.
Fig. 3 is a graph showing a relationship between a surface roughness (Ra) and a dynamic coefficient of friction.
Fig. 4 is a schematic view showing a method of measuring a dynamic coefficient of friction (curved glass plate).

### Explanation of Reference Numerals

1: Water-repellent film coated article; 2: Wiper rubber probe; 3: Traction member; 4: Measuring device; 11: Glass plate (flat plate); 12: water-repellent film; 13: Glass plate (curved plate); 21: Wiper rubber; 22: Plate member; 23: Weight; 24a: Center mark; 24b: Center mark

### BEST MODE FOR CARRYING OUT THE INVENTION

The water-repellent film coated article of the present invention includes a base material (substrate) and a water-repellent film made mainly of silicon oxide which is formed on the surface of the base material. As the method of forming the water-repellent film, there may be suitably used, for example, a sol-gel method, etc., though not particularly limited thereto.
The base material used in the film coated article of the present invention is not particularly limited. Examples of the base material suitably used in the present invention include a transparent glass plate, resin plate and resin film. The thickness of the base material may be appropriately determined depending upon applications thereof, and is usually from about 0.01 to 10 mm though not particularly limited thereto.

The water-repellent film used in the film coated article of the present invention contains silicon oxide as a main component, and a water-repellent layer formed therein preferably contains a fluoroalkyl group in view of imparting an excellent durability to the water-repellent film. More specifically, the water-repellent film includes an undercoat layer made mainly of silicon oxide and the water-repellent layer formed on the undercoat layer in which the water-repellent layer is preferably bonded to the undercoat layer. The water-repellent layer preferably contains a fluoroalkylsilane or a hydrolyzable group-containing organosilane and more preferably contains the fluoroalkylsilane in view of an excellent durability of the water-repellent film.
Also, when the water-repellent layer contains a fluoroalkyl group, the concentration of fluorine in the surface of the water-repellent film is preferably 0.8 or more in terms of atomic ratio of fluorine atom to silicon atom in view of a good initial water repellency. For the above viewpoint, the atomic ratio of fluorine atom to silicon atom in the surface of the water-repellent film is more preferably 1.0 or more. On the other hand, the upper limit of the atomic ratio is not particularly limited, and is preferably 1.5 or less. When the atomic ratio of fluorine atom to silicon atom in the surface of the water-repellent film is 1.5 or less, the water-repellent group completely covers the undercoat layer, and there is a less possibility that a surplus of the water-repellent group remains on the undercoat layer, thereby preventing occurrence of judder of the wiper.

The water-repellent film having a two-layer structure constituted of the above undercoat layer and water-repellent layer is generally classified into a two-coat type obtained by first forming the undercoat layer in the base material and then forming the water-repellent layer on the undercoat layer, and one-coat type obtained by allying a solution prepared by mixing an undercoat layer component with a water-repellent layer component on the base material by one coating step to form an undercoat layer and a water-repellent layer thereon.
In the present invention, although any of the above two types may be used, the water-repellent film of one-coat type is more preferred in order to attain a suitable arithmetic mean roughness (Ra) on the surface of the film as described later, and effectively prevent occurrence of judder of the wiper thereon. Usually, when forming the water-repellent film of the two-coat type, an excess amount of the water-repellent layer coating solution tends to be applied upon forming the water-repellent layer. In such case, it is required to conduct an additional step for removing a surplus of the water-repellent agent (dried water-repellent layer coating solution) which is not used for bonding to the undercoat layer. Unless the surplus of the water-repellent agent is fully removed, the water-repellent agent tends to be attached to a wiper rubber upon operation of the wiper or remain non-uniformly on the surface of the base material. Therefore, it is considered that the coefficient of friction on the surface of the base material tends to become non-uniform, resulting in occurrence of judder of the wiper.
As described above, in the water-repellent film of the two-coat type, it is important to completely remove a surplus of the water-repellent agent therefrom. As the method of removing the surplus of the water-repellent agent, there is preferably used the method of rubbing the surface of the water-repellent film with a cloth impregnated with an organic solvent such as ethanol several ten times or more. In the above method, it is preferred that the cloth is frequently replaced with new one, and while measuring a contact angle and a tumbling angle on the surface of the water-repellent film, the rubbing procedure is repeated until the contact angle and the tumbling angle are stabilized. Further, in the above method, it is more preferred that the water-repellent film is successively dipped in ethanol, acetone, toluene, a fluorine-based solvent, etc., to subject the film to ultrasonic cleaning for a period of from several minutes to 30 min, followed by rubbing the film with a cloth impregnated with ethanol.
On the other hand, when forming the water-repellent film of the one-coat type, a surplus amount of the water-repellent agent (dried coating solution) is smaller than that of the two-coat type. Therefore, the step of removing the surplus of the water-repellent agent from the one-coat type may be simplified as compared to the two-coat type, and may be omitted in some cases.

Next, the material of the water-repellent film of the one-coat type as the more preferred embodiment which contains a fluoroalkyl group is described in detail. The water-repellent film may be formed from various materials. In the present invention, the water-repellent film can be readily produced by applying a coating solution containing (A) silicon alkoxide and/or a hydrolyzate thereof, (B) fluoroalkyl group-containing silane compound, (C) an acid and (D) water onto the base material, and then drying the applied coating solution.

Examples of the silicon alkoxide as the component (A) include tetramethoxysilane, tetraethoxysilane, tetrapropoxysilane and tetrabutoxysilane. Among these silicon alkoxides, preferred are those having a relatively small molecular weight such as, for example, tetraalkoxysilanes containing an alkoxyl group having 3 or less carbon atoms in view of readily forming a dense film. In addition, there may also be used polymers of these tetraalkoxysilanes having an average polymerization degree of 5 or less. Meanwhile, the content of the component (A) in the coating solution is preferably from 0.01 to 2% by mass and more preferably from 0.01 to 0.6% by mass in terms of silica as described later.

As the fluoroalkyl group-containing silane compound as the component (B), there may be suitably used those silane compounds containing not only a fluoroalkyl group but also a hydrolyzable group such as an alkoxyl group, an acyloxy group and a chlorine group. Examples of the fluoroalkyl group-containing silane compound include the compounds represented by the following chemical formula (I):

CF₃-(CF₂)ₙ-R-SiXₚY₃₋ₚ (I)

wherein n is an integer of from 0 to 12 and preferably from 3 to 12; R is a divalent organic group having 2 to 10 carbon atoms (for example, methylene group, ethylene group, etc.), or a group containing a silicon atom and an oxygen atom; X is a hydrogen atom or a monovalent hydrocarbon group having 1 to 4 carbon atoms (for example, an alkyl group, a cycloalkyl group and an aryl group) or a substituent group selected from derivatives thereof. p is 0, 1 or 2; and Y is an alkoxyl group having 1 to 4 carbon atoms, an acyloxy group or a halogen atom.
Specific examples of the fluoroalkyl group-containing silane compound include C₆F₁₃CH₂CH₂Si(OCH₃)₃, C₇F₁₅CH₂CH₂Si(OCH₃)₃, C₈F₁₇CH₂CH₂Si(OCH₃)₃, C₉F₁₉CH₂CH₂Si(OCH₃)₃, C₁₀F₂₁CH₂CH₂Si(OCH₃)₃, C₆F₁₃CH₂CH₂SiCl₃, C₇F₁₅CH₂CH₂SiCl₃, C₈F₁₇CH₂CH₂SiCl₃, C₉F₁₉CH₂CH₂SiCl₃, C₁₀F₂₁CH₂CH₂SiCl₃, C₈F₁₇CH₂CH₂Si(CH₃)(OCH₃)₂, C₈F₁₇CH₂CH₂Si(OC₂H₅)₃, C₈F₁₇CH₂CH₂Si(OCOCH₃)₃ and (CF₃)₂CF(CF₂)₈CH₂CH₂Si(OCH₃)₃. Among these compounds, preferred are C₈F₁₇CH₂CH₂Si(OCH₃)₃ (heptadecafluorodecyl trimethoxysilane), C₈F₁₇CH₂CH₂Si(CH₃)(OCH₃)₂ (heptadecafluorodecylmethyl dimethoxysilane), C₈F₁₇CH₂CH₂SiCl₃ (heptadecafluorodecyl trichlorosilane) and C₈F₁₇CH₂CH₂Si(CH₃)Cl₂ (heptadecafluorodecylmethyl dichlorosilane), and more preferred are heptadecafluorodecyl trimethoxysilane and heptadecafluorodecyl trichlorosilane.
These fluoroalkyl group-containing silane compounds may be used alone or in combination of a plurality of these compounds.
Meanwhile, the content of the component (B) in the coating solution is preferably from 0.00001 to 0.15% by mass and more preferably from 0.0001 to 0.03% by mass in terms of silica as described later.

The acid as the component (C) is preferably a volatile acid such as hydrochloric acid, hydrofluoric acid, nitric acid and acetic acid because these acids can be volatilized upon drying at ordinary temperature and do not remain in the resultant film. Among these acids, hydrochloric acid is especially preferred because of a high volatility, a capability of providing a water-repellent film having a relatively good appearance and a high durability, and a relatively high safety upon handling. Meanwhile, the concentration of the component (C) in the coating solution is preferably from 0.001 to 3 N and more preferably from 0.01 to 1N as described later.
Also, water as the component (D) is optionally added to the coating solution to dissolve the acid therein, and a purified water is usually used as the component (D). Meanwhile, the content of the component (D) in the coating solution is preferably in the range of from 0 to 20% by mass, more preferably from 0 to 10% by mass and still more preferably from 0 to 5% by mass as described later.

The above components (A) and (B) are dissolved in a solvent upon preparing the coating composition from the viewpoint of convenience upon handling. As the solvent, there may be used various solvents. Examples of the solvent include organic solvents, e.g., hydrocarbons such as hexane, toluene and cyclohexane; halogenated hydrocarbons such as methyl chloride, carbon tetrachloride and trichloroethylene; ketones such as acetone and methyl ethyl ketone; nitrogen-containing compounds such as diethylamine; alcohols; and esters such as ethyl acetate. Among these solvents, preferred are alcohol-based solvents in view of a good dissolvability of acids therein. Specific examples of the alcohol-based solvents include methanol, ethanol, 1-propanol, 2-propanol, butyl alcohol and amyl alcohol. Among these alcohols, more preferred are chain-like saturated monohydric alcohols having 3 or less carbon atoms such as methanol, ethanol, 1-propanol and 2-propanol in view of a high evaporation rate at ordinary temperature.

The coating solution of one-coat type used in the present invention may also contain, for example, a small amount of methyl trialkoxysilane in addition to the silicon alkoxide (A), the fluoroalkyl group-containing silane compound (B) and the acid (C). Specific examples of the methyl trialkoxysilane include methyl trimethoxysilane, methyl triethoxysilane, methyl tripropoxysilane and methyl tributoxysilane. The content of the methyl trialkoxysilane in the coating solution is 50% by mass or less on the basis of the content of the silicon alkoxide.

In the coating solution used in the present invention which contains the silicon alkoxide, the fluoroalkyl group-containing silane compound, the acid, the solvent and water (including water entering in the coating solution as an impurity of the solvent or from an ambient humidity in addition to water added for dissolving the acid), during preparation and storage and after coating, the silicon alkoxide and water undergo a hydrolysis reaction represented by the following formula (II) in the presence of the acid as a catalyst.

(-Si-OR) + (H₂O) → (-Si-OH + (ROH) (II)

wherein R is an alkyl group.
Further, the silanol groups (-Si-OH) produced in the hydrolysis reaction are subjected to dehydration condensation reaction represented by the following formula (III) to form a siloxane bond (-Si-O-Si-).

(-Si-OH) + (-Si-OH) → (-Si-O-Si-) + (H₂O) (III)

Meanwhile, whether or not the hydrolysis reaction of an alkoxyl group in the silicon alkoxide as represented by the above formula (II) as well as the dehydration condensation reaction between the silanol groups (-Si-OH) produced by the hydrolysis reaction as represented by the above formula (III) occur in the coating solution containing the silicon alkoxide, the fluoroalkyl group-containing silane compound, the acid, the solvent and water, largely depends upon concentration of the acid, concentration of the silicon alkoxide or its hydrolyzate and water content in the coating solution. More specifically, when the concentration of the acid in the coating solution is in the range of from 0.001 to 3 N, the above reactions tend to hardly occur. Further, as the concentration of the silicon alkoxide or its hydrolyzate and water content in the coating solution are decreased, the above reactions tend to be difficult to occur.

In the present invention, the silicon alkoxide in the coating solution is prevented from undergoing the above dehydration condensation reaction, and is maintained substantially in the form of a monomer, and when applying the coating solution onto the surface of the base material and then drying the applied coating solution, the silicon alkoxide is rapidly subjected to the reactions represented by the above formulae (II) and (III) to form the siloxane bond, thereby enabling production of a dense film at ordinary temperature. In the conventional methods in which the silicon alkoxide is subjected to hydrolysis and polycondensation reaction in the coating solution, the obtained silicon alkoxide polymers are bonded to each other when applying the coating solution onto the surface of the base material and then drying the applied coating solution, resulting in formation of crevices or voids in the resultant film and thereby failing to obtain a dense film. In order to form a dense film, it has been required to subject the applied coating solution to baking and hardening treatments. Therefore, in the present invention, the silicon alkoxide or a hydrolyzate thereof in the coating solution is preferably in the form of a monomer or a lower polymer having a less polymerization degree than an icosamer. However, when the total content of the monomer and its hydrolyzate, and the lower polymer having a less polymerization degree than an icosamer is 80% by mass or more on the basis of the whole silicon alkoxide, the icosamer or higher polymers of the silicon alkoxide may also be contained in the coating solution.

In the present invention, the concentration of the acid catalyst in the coating solution is maintained in the range of from 0.001 to 3 N and preferably from 0.01 to 1 N. When the concentration of the acid catalyst in the coating solution lies within the above specified range, the hydrolysis reaction of the remaining alkoxyl group as represented by the above formula (II) and the dehydration condensation reaction as represented by the above formula (III) tend to hardly occur in the coating solution before coating, and tend to rapidly proceed immediately after applying the coating solution.
In addition, the concentration of the silicon alkoxide or its hydrolyzate in the coating solution is preferably as low as possible to prevent the hydrolysis reaction of the remaining alkoxyl group as represented by the above formula (II) and the dehydration condensation reaction as represented by the above formula (III) from occurring in the coating solution before coating in association with the effect of the acid concentration in the coating solution. However, when the concentration of the silicon alkoxide or its hydrolyzate in the coating solution is too low, the thickness of the obtained water-repellent film tends to become too small, for example, less than 5 nm. As a result, the obtained film tends to be deteriorated in capability of preventing diffusion of alkali components when the base material contains the alkali components, resulting in poor durability of the film. On the other hand, when the concentration of the silicon alkoxide or its hydrolyzate in the coating solution is more than 2% by mass, the thickness of the obtained water-repellent film tends to exceed 200 nm, and the film tends to be readily injured, thereby failing to obtain a firm water-repellent film. Therefore, the concentration of the silicon alkoxide or its hydrolyzate (including lower polymers than an icosamer thereof) in the coating solution is preferably in the range of from 0.01 to 2% by mass and more preferably from 0.01 to 0.6% by mass in terms of silica.

As described above, when the thickness of the water-repellent film is too large, the resultant film tends to be deteriorated in hardness, whereas when the thickness of the water-repellent film is too small, the resultant film tends to be deteriorated in durability. Therefore, the thickness of the water-repellent film is preferably from 5 to 200 nm, more preferably from 5 to 100 nm and still more preferably from 5 to 50 nm.

When the concentration of the fluoroalkyl group-containing silane compound in the coating solution is too low, the resultant water-repellent film tends to be deteriorated in water repellency, whereas when the concentration of the fluoroalkyl group-containing silane compound in the coating solution is too high, the obtained film tends to be deteriorated in hardness. Therefore, the concentration of the fluoroalkyl group-containing silane compound in the coating solution is preferably in the range of from 0.00001 to 0.15% by mass and more preferably from 0.0001 to 0.03% by mass in terms of silica. The ratio of the content of the fluoroalkyl group-containing silane compound (mass in terms of silica) to the content of the silicon alkoxide (mass in terms of silica) in the coating solution substantially corresponds to the ratio of the content of a fluoroalkyl group to the content of silica in the water-repellent film obtained after applying and drying the coating solution. Therefore, when the ratio of the content of the fluoroalkyl group-containing silane compound to the content of the silicon alkoxide in the coating solution is too low, the obtained water-repellent film tends to be deteriorated in water repellency, whereas when the ratio of the content of the fluoroalkyl group-containing silane compound to the content of the silicon alkoxide in the coating solution is too high, the obtained water-repellent film tends to be deteriorated in durability. Therefore, the value of the mass ratio represented by the formula: [amount of fluoroalkyl group-containing silane compound (in terms of silica)]/[amount of silicon alkoxide or its hydrolyzate (in terms of silica)] is preferably from 0.0005 to 0.5, more preferably from 0.0005 to 0.3 and still more preferably from 0.0005 to 0.05.

When a large amount of water is present in the coating solution, the hydrolysis reaction of the silicon alkoxide into a hydrolyzate thereof tends to be promoted, and the dehydration condensation reaction of the hydrolyzate tends to readily take place, and the resultant film tends to suffer from uneven thickness thereof upon drying the coating solution applied. For this reason, the concentration of water in the coating solution is suitably as low as possible, and is preferably from 0 to 20% by mass, more preferably from 0 to 10% by mass and most preferably from 0 to 5% by mass. When the concentration of water in the coating solution is maintained in the above-specified range, the hydrolysis reaction of the remaining alkoxyl group as represented by the above formula (II) and the dehydration condensation reaction as represented by the above formula (III) is desirably prevented from occurring in the coating solution before coating in association with the effects of maintaining the acid concentration in the coating solution as well as maintaining the concentration of the silicon alkoxide (or its hydrolyzate) in the coating solution. Even though the concentration of water is zero, the hydrolysis reaction is not inhibited, since water present in an ambient air is absorbed into the coating film formed on the base material by applying the coating solution thereto. However, when alcohol is used as the solvent, since a slight amount of water is inherently contained in the alcohol or the acid is frequently added in the form of an aqueous solution, the concentration of water in the coating solution is usually 0.1% by mass or higher.

The coating solution used in the present invention preferably contains the above acid and water in such an amount that the mass ratio of the acid to water is preferably 0.002 or more and more preferably 0.02 or more. The reason therefor is that when the contents of the acid and water in the coating solution lie within the above-specified range, the hydrolysis reaction of the remaining alkoxyl group as represented by the above formula (II) and the dehydration condensation reaction as represented by the above formula (III) tend to hardly occur in the coating solution before coating. When the solution prepared by dissolving the silicon alkoxide, the fluoroalkyl group-containing silane compound and the acid in the above ratios in a solvent is stirred, the silicon alkoxide is mainly subjected to the reaction represented by the above formula (II) to form a hydrolyzate thereof, and a part of the hydrolyzate is then subjected to the dehydration condensation reaction represented by the above formula (III). In the thus prepared coating solution, the silicon alkoxide is present in the form of a monomer (including its hydrolyzate) or a lower polymer having a less polymerization degree than an icosamer thereof. When applying the coating solution onto the base material, the coating solution applied in the form of a film is increased in specific surface area, so that the solvent contained in the film is rapidly vaporized, whereby the concentrations of the silicon alkoxide and the hydrolyzate thereof in the film are rapidly increased. Under this circumstance, the hydrolysis reaction and the dehydration condensation reaction (including a further polycondensation reaction of the lower polymer having a less polymerization degree than an icosamer thereof) which are suppressed until this time rapidly occurs to produce a large number of siloxane bonds (--Si-O-Si--) in the coating film. As a result, the surface of the base material and the water-repellent film are firmly bonded to each other to thereby form a highly dense film having a thickness of from 5 to 20 nm which is made mainly of silica. Thus, in the present invention, the reactions take place at room temperature owing to a high reactivity upon forming the film, so that the very dense film is produced without requiring a subsequent baking step of the film. On the other hand, when the coating solution already contains a large number of siloxane bonds owing to the dehydration condensation reaction as well as polymers having a polymerization degree of 20 or more therein like the conventional coating solutions, although the siloxane bonds are still present in the resultant water-repellent film, the amount of siloxane bonds produced for bonding the surface of the base material and the water-repellent film to each other is not large, so that the bond between the surface of the base material and the water-repellent film is not so strong. In the conventional techniques, in order to strongly bond the surface of the base material and the water-repellent film to each other, it has been required to subject the film to baking at a higher temperature.

As the other material for forming the water-repellent film of one-coat type, there may also be used a solution prepared by dissolving (E) a chlorosilyl group-containing compound and (B) the fluoroalkyl group-containing silane compound in a solvent containing (F) alcohol and/or water to replace a chloro group of the chlorosilyl group-containing compound with an alkoxyl group or a hydroxyl group which contains the silicon alkoxide or the hydrolyzate thereof in the form of a monomer, or a nonadecamer or a lower polymer.
The chlorosilyl group-containing compound (E) used herein means such a compound containing at least one chlorosilyl group in a molecule thereof, and the chlorosilyl group is a group represented by the formula:-SiClₙX₃₋ₙ wherein n is 1, 2 or 3; and X is hydrogen, or an alkyl group, an alkoxyl group or an acyloxy group respectively having 1 to 10 carbon atoms.
Among these chlorosilyl group-containing compounds, preferred are those compounds containing at least two chlorine atoms, and more preferred are chlorosilanes obtained by replacing at least two hydrogen atoms in silanes represented by the formula: SiH₂ₙ₊₂ wherein n is an integer of 1 to 5, with chlorine, and optionally replacing remaining hydrogen atoms with the above alkyl group, alkoxyl group or acyloxy group, and a partially hydrolyzate or a polycondensation product thereof.
Specific examples of the chlorosilyl group-containing compound include tetrachlorosilane (SiCl₄), trichlorosilane (SiHCl₃), trichloromonomethylsilane (Si(CH₃)Cl₃), dichlorosilane (SiH₂Cl₂) and Cl-(SiCl₂O)ₙ-SiCl₃ wherein n is an integer of 1 to 10. These chlorosilyl group-containing compounds may be used alone or in combination of a plurality of these compounds. The most preferred chlorosilyl group-containing compound is tetrachlorosilane.

As the solvent, there may be used such a solvent containing alcohol and/or water which is capable of subjecting the chlorosilyl group-containing compound to dechlorination reaction in which a chloro group of the chlorosilyl group-containing compound is replaced with an alkoxyl group or a hydroxyl group. Examples of the preferred solvent include alcohol-based hydrophilic solvents and ketone-based hydrophilic solvents.
Among these solvents, preferred are alcohol-based solvents, and more preferred are chain-like saturated monohydric alcohols having 3 or less carbon atoms such as methanol, ethanol, 1-propanol and 2-propanol in view of a high evaporation rate at ordinary temperature. Specific examples of the ketone-based hydrophilic solvents include acetone and methyl ethyl ketone.
Meanwhile, it is not necessarily required that the solvent contains alcohol as long as the solvent contains water in such an amount as required for causing the above dehydrochlorination reaction. Further, it is not required that the solvent is composed of the hydrophilic solvents solely, and may also contain a non-aqueous solvent such as hydrocarbon-based solvents and fluorine-based solvents.

In the process for producing the water-repellent film by using the chlorosilyl group-containing compound, a solution prepared by dissolving the chlorosilyl group-containing compound and the fluoroalkyl group-containing silane compound in the hydrophilic solvent is applied onto the surface of the base material, for example, a glass substrate. At this time, various chemical reactions occur between -OH group present on the surface of the base material and the fluoroalkyl group-containing silane compound, the chlorosilyl group-containing compound and the hydrophilic solvent which are contained in the thus formed coating film.
More specifically, as described in detail below, the chlorosilyl group is converted into a siloxane bond (-Si-O-Si-) in the coating solution during preparation and storage of the coating solution and during formation of the coating film. A part of the thus formed siloxane bond is bonded to the fluoroalkyl group-containing silane compound, and the other part thereof is bonded to the surface of the base material, thereby forming the respective siloxane bonds therebetween.
For example, when using the alcohol-based solvent, the chlorosilyl group-containing compound contained in the coating solution is subjected to dehydrochlorination reaction with the alcohol-based solvent as shown in the following formula (IV) to thereby form an alkoxide. Also, the chlorosilyl group-containing compound undergoes hydrolysis reaction by water contained in a trace amount in the alcohol-based solvent or an ambient atmosphere to remove hydrogen chloride therefrom (dehydrochlorination reaction) as shown in the following formula (V). Upon the above hydrolysis reaction, a silanol (··Si-OH) is produced. Meanwhile, in the following formulae, R represents an alkyl group.

(··Si-Cl) + (ROH) → (··Si-OR) + (HCl) (IV)

(··Si-Cl) + (H₂O) → (··Si-OH) + (HCl) (V)

Hydrochloric acid produced in the alcohol solvent according to the formulae (IV) and (V) acts as a catalyst for the reaction represented by the above formula (II), and a part of (--Si-OR) is further converted into silanol.
A part of the silanol produced by the reactions represented by the above formulae (V) and (II) is subjected to the reaction as represented by the following formula (VI) to form a siloxane bond (-Si-O-Si-). Further, a certain part of the silanol thus produced is subjected to dehydration condensation reaction represented by the above formula (III) to also form a siloxane bond.

(--Si-Cl) + (--Si-OH) → (--Si-Q-Si--) + (HCl) (VI)

The chloro group contained in the chlorosilyl group-containing compound has an extremely high reactivity. Therefore, almost all of chloro groups of the chlorosilyl group-containing compound contained in the alcohol solvent are reacted and converted into (--Si-OR), (-Si-OH), ("Si-0-Si-) and (HCl). Thus, in the above coating solution, not only the silicon alkoxide or the hydrolyzate thereof and the fluoroalkyl group-containing silane compound but also hydrochloric acid are contained in the alcohol solvent. Also, even when using the hydrophilic solvent other than the alcohol-based solvent, the chloro group is reacted with water inevitably contained in the hydrophilic solvent and converted into (-Si-OH), (--Si-O-Si--) and (HCl) represented by the formulae (V) and (III).
Accordingly, substantially no chloro group having a high reactivity remains in the coating solution, resulting in a prolonged pot life of the coating solution. Further, the coating solution tends to be hardly influenced by an ambient atmosphere during the working procedure, resulting in easy maintenance thereof.

Next, the materials used for forming the water-repellent film of two-coat type are explained. In the two-coat type, first, the coating solution for forming an undercoat layer (hereinafter occasionally referred to as an "undercoat layer coating solution") is applied onto the base material to form an undercoat layer, and then the coating solution for forming a water-repellent layer (hereinafter occasionally referred to as a "water-repellent layer coating solution") is applied onto the undercoat layer, thereby forming the water-repellent film coated article of the present invention.
The undercoat layer coating solution is preferably a solution obtained by excluding the component (B) from the coating solution of one-coat type. More specifically, the undercoat layer coating solution is composed of (A) the silicon alkoxide and/or the hydrolyzate thereof, (C) the acid and (D) water. The preferred embodiments of the respective components are the same as described above. The contents of the components (A), (C) and (D) are from 0.01 to 3% by mass (in terms of silica), from 0.001 to 1 N and from 0 to 10% by mass, respectively.

The water-repellent layer coating solution preferably contains an organosilane containing a fluoroalkyl group as a water-repellent functional group and/or a hydrolyzable group.
Examples of the fluoroalkyl group-containing organosilane include perfluoroalkyl group-containing trichlorosilanes such as CF₃(CF₂)₁₁(CH₂)₂SiCl₃, CF₃(CF₂)₁₀(CH₂)₂SiCl₃, CF₃(CF₂)₉(CH₂)₂SiCl₃, CF₃(CF₂)₈(CH₂)₂SiCl₃, CF₃(CF₂)₇(CH₂)₂SiCl₃, CF₃(CF₂)₆(CH₂)₂SiCl₃, CF₃(CF₂)₅(CH₂)₂SiCl₃, CF₃(CF₂)₄(CH₂)₂SiCl₃, CF₃(CF₂)₃(CH₂)₂SiCl₃, CF₃(CF₂)₂(CH₂)₂SiCl₃, CF₃CF₂(CH₂)₂SiCl₃ and CF₃(CH₂)₂SiCl₃; perfluoroalkyl group-containing trialkoxysilanes such as CF₃(CF₂)₁₁(CH₂)₂Si(OCH₃)₃, CF₃(CF₂)₁₀(CH₂)₂Si(OCH₃)₃, CF₃(CF₂)₉(CH₂)₂Si(OCH₃)₃, CF₃(CF₂)₈(CH₂)₂Si(OCH₃)₃, CF₃(CF₂)₇(CH₂)₂Si(OCH₃)₃, CF₃(CF₂)₆(CH₂)₂Si(OCH₃)₃, CF₃(CF₂)₅(CH₂)₂Si(OCH₃)₃, CF₃(CF₂)₄(CH₂)₂Si(OCH₃)₃, CF₃(CF₂)₃(CH₂)₂Si(OCH₃)₃, CF₃(CF₂)₂(CH₂)₂Si(OCH₃)₃, CF₃CF₂(CH₂)₂Si(OCH₃)₃, CF₃(CH₂)₂Si(OCH₃)₃, CF₃(CF₂)₁₁(CH₂)₂Si(OC₂H₆)₃, CF₃(CF₂)₁₀(CH₂)₂Si(OC₂H₅)₃, CF₃(CF₂)₉(CH₂)₂Si(OC₂H₅)₃, CF₃(CF₂)₈(CH₂)₂Si(OC₂H₅)₃, CF₃(CF₂)₇(CH₂)₂Si(OC₂H₅)₃, CF₃(CF₂)₆(CH₂)₂Si(OC₂H₅)₃, CF₃(CF₂)₆(CH₂)₂Si(OC₂H₅)₃, CF₃(CF₂)₄(CH₂)₂Si(OC₂H₅)₃, CF₃(CF₂)₃(CH₂)₂Si(OC₂H₅)₃, CF₃(CF₂)₂(CH₂)₂Si(OC₂H₅)₃, CF₃CF₂(CH₂)₂Si(OC₂H₅)₃ and CF₃(CH₂)₂Si(OC₂H₅)₃; perfluoroalkyl group-containing triacyloxysilanes such as CF₃(CF₂)₁₁(CH₂)₂Si(OCOCH₃)₃, CF₃(CF₂)₁₀(CH₂)₂Si(OCOCH₃)₃, CF₃(CF₂)₉(CH₂)₂Si(OCOCH₃)₃, CF₃(CF₂)₈(CH₂)₂Si(OCOCH₃)₃, CF₃(CF₂)₇(CH₂)₂Si(OCOCH₃)₃, CF₃(CF₂)₆(CH₂)₂Si(OCOCH₃)₃, CF₃(CF₂)₅(CH₂)₂Si(OCOCH₃)₃, CF₃(CF₂)₄(CH₂)₂Si(OCOCH₃)₃, CF₃(CH₂)₂(CH₂)₂Si(OCOCH₃)₃, CF₃(CF₂)₂(CH₂)₂Si(OCOCH₃)₃, CF₃CF₂(CH₂)₂Si(OCOOH₃)₃ and CF₃(CH₂)₂Si(OCOCH₃)₃; and perfluoroalkyl group-containing triisocyanate silanes such as CF₃(CF₂)₁₁(CH₂)₂Si(NCO)₃, CF₃(CF₂)₁₀(CH₂)₂Si(NCO)₃, CF₃(CF₂)₉(CH₂)₂Si(NCO)₃, CF₃(CF₂)₈(CH₂)₂Si(NCO)₃, CF₃(CF₂)₇(CH₂)₂Si(NCO)₃, CF₃(CF₂)₆(CH₂)₂Si(NCO)₃, CF₃(CF₂)₅(CH₂)₂Si(NCO)₃, CF₃(CF₂)₄(CH₂)₂Si(NCO)₃, CF₃(CF₂)₃(CH₂)₂Si(NCO)₃, CF₃(CF₂)₂(CH₂)₂Si(NCO)₃, CF₃CF₂(CH₂)₂Si(NCO)₃ and CF₃(CH₂)₂Si(NCO)₃.

Also, the water-repellent layer coating solution preferably contains a hydrolyzable group-containing organosilane. The organosilane is not particularly limited, and examples of the preferred organosilane include those organosilanes containing a linear alkyl group having 1 to 30 carbon atoms and a hydrolyzable group.

Examples of the alkyl group-containing organosilane include alkyl group-containing chlorosilanes such as CH₃(CH₂)₃₀SiCl₃, CH₃(CH₂)₂₀SiCl₃, CH₃(CH₂)₁₈SiCl₃, CH₃(CH₂)₁₆SiCl₃, CH₃(CH₂)₁₄SiCl₃, CH₃(CH₂)₁₂SiCl₃, CH₃(CH₂)₁₀SiCl₃, CH₃(CH₂)₉SiCl₃, CH₃(CH₂)₈SiCl₃, CH₃(CH₂)₇SiCl₃, CH₃(CH₂)₆SiCl₃, CH₃(CH₂)₅SiCl₃, CH₃(CH₂)₄SiCl₃, CH₃(CH₂)₃SiCl₃, CH₃(CH₂)₂SiCl₃, CH₃CH₂SiCl₃, (CH₃CH₂)₂SiCl₂, (CH₃CH₂)₃SiCl, CH₃SiCl₃, (CH₃)₂SiCl₂ and (CH₃)₃SiCl; alkyl group-containing alkoxysilanes such as CH₃(CH₂)₃₀Si(OCH₃)₃, CH₃(CH₂)₂₀Si(OCH₃)₃, CH₃(CH₂)₁₈Si(OCH₃)₃, CH₃(CH₂)₁₆Si(OH₃)₃, CH₃(CH₂)₁₄Si(OCH₃)₃, CH₃(CH₂)₁₂Si(OCH₃)₃, CH₃(CH₂)₁₀Si(OCH₃)₃, CH₃(CH₂)₉Si(OCH₃)₃, CH₃(CH₂)₈Si(OCH₃)₃, CH₃(CH₂)₇Si(OCH₃)₃, CH₃(CH₂)₆Si(OCH₃)₃, CH₃(CH₂)₅Si(OCH₃)₃, CH₃(CH₂)₄Si(OCH₃)₃, CH₃(CH₂)₃Si(OCH₃)₃, CH₃(CH₂)₂Si(OCH₃)₃, CH₃CH₂Si(OCH₃)₃, (CH₃CH₂)₂Si(OCH₃)₂, (CH₃CH₂)₃SiOCH₃, CH₃Si(OCH₃)₃, (CH₃)₂Si(OCH₃)₂, (CH₃)₃SiOCH₃, CH₃(CH₂)₃₀Si(OC₂H₅)₃, CH₃(CH₂)₂₀Si(OC₂H₅)₃, CH₃(CH₂)₁₈Si(OC₂H₅)₃, CH₃(CH₂)₁₆Si(OC₂H₅)₃, CH₃(CH₂)₁₄Si(OC₂H₅)₃, CH₃(CH₂)₁₂Si(OC₂H₅)₃, CH₃(CH₂)₁₀Si(OC₂H₅)₃, CH₃(CH₂)₉Si(OC₂H₅)₃, CH₃(CH₂)₈Si(OC₂H₅)₃, CH₃(CH₂)₇Si(OC₂H₅)₃, CH₃(CH₂)₆Si(OC₂H₅)₃, CH₃(CH₂)₅Si(OC₂H₅)₃, CH₃(CH₂)₄Si(OC₂H₅)₃, CH₃(CH₂)₃Si(OC₂H₅)₃, CH₃(CH₂)₂Si(OC₂H₅)₃, CH₃CH₂Si(OC₂H₅)₃, (CH₃CH₂)₂Si(OC₂H₅)2, (CH₃CH₂)₃SiOC₂H₅, CH₃Si(OC₂H₅)₃, (CH₃)₂Si(OC₂H₅)₂ and (CH₃)₃SiOC₂H₅; alkyl group-containing acyloxysilanes such as CH₃(CH₂)₃₀Si(OCOCH₃)₃, CH₃(CH₂)₂₀Si(OCOCH₃)₃, CH₃(CH₂)₁₈Si(OCOCH₃)₃, CH₃(CH₂)₁₆Si(OCOCH₃)₃, CH₃(CH₂)₁₄Si(OCOCH₃)₃, CH₃(CH₂)₁₂Si(OCOCH₃)₃, CH₃(CH₂)₁₀Si(OCOCH₃)₃, CH₃(CH₂)₉Si(OCOCH₃)₃, CH₃(CH₂)₈Si(OCOCH₃)₃, CH₃(CH₂)₇Si(OCOCH₃)₃, CH₃(CH₂)₆Si(OCOCH₃)₃, CH₃(CH₂)₅Si(OCOCH₃)₃, CH₃(CH₂)₄Si(OCOCH₃)₃, CH₃(CH₂)₃Si(OCOCH₃)₃, CH₃(CH₂)₂Si(OCOCH₃)₃, CH₃CH₂Si(OCOCH₃)₃, (CH₃CH₂)₂Si(OCOCH₃)₂, (CH₃CH₂)₃SiOCOCH₃, CH₃Si(OCOCH₃)₃, (CH₃)₂Si(OCOCH₃)₂ and (CH₃)₃SiOCOCH₃; and alkyl group-containing isocyanate silanes such as CH₃(CH₂)₃₀Si(NCO)₃, CH₃(CH₂)₂₀Si(NCO)₃, CH₃(CH₂)₁₈Si(NCO)₃, CH₃(CH₂)₁₆Si(NCO)₃, CH₃(CH₂)₁₄Si(NCO)₃, CH₃(CH₂)₁₂Si(NCO)₃, CH₃(CH₂)₁₀Si(NCO)₃, CH₃(CH₂)₉Si(NCO)₃, CH₃(CH₂)₈Si(NCO)₃, CH₃(CH₂)₇Si(NCO)₃, CH₃(CH₂)₆Si(NCO)₃, CH₃(CH₂)₅Si(NCO)₃, CH₃(CH₂)₄Si(NCO)₃, CH₃(CH₂)₃Si(NCO)₃, CH₃(CH₂)₂Si(NCO)₃, CH₃CH₂Si(NCO)₃, (CH₃CH₂)₂Si(NCO)₂, (CH₃CH₂)₃SiNCO, CH₃Si(NCO)₃, (CH₃)₂Si(NCO)₂ and (CH₃)₃SiNCO.

In addition, the water-repellent layer coating solution may also contain an organosilane containing a polyalkyleneoxide group and a hydrolyzable group in a molecule thereof. The water-repellent layer obtained by using the coating solution containing such an organosilane exhibits a small tumbling angle at which water droplets start to roll down thereon, and hardly suffers form adsorption and attachment of dirt or smears thereonto. Examples of the polyalkyleneoxide group mainly usable in the coating solution include a polyethyleneoxide group and a polypropyleneoxide group. Examples of the organosilanes containing these polyalkyleneoxide groups include [alkoxy(polyalkyleneoxy)alkyl]trialkoxysilanes, N-(triethoxysilylpropyl)-O-polyethyleneoxide urethane, [alkoxy(polyalkyleneoxy)alkyl]trichlorosilanes and N-(trichlorosilylpropyl)-O-polyethyleneoxide urethane. Specific examples of the preferred organosilanes containing the polyalkyleneoxide groups include [methoxy(polyethyleneoxy)propyl]trimethoxysilane, [methoxy(polyethyleneoxy)propyl]triethoxysilane and [butoxy(polypropyleneoxy)propyl]trimethoxysilane.

When the coating solution prepared by dissolving the organosilane in the alcohol solvent and then hydrolyzing the resultant solution in the presence of the acid catalyst is applied onto the above undercoat layer, the alkoxyl group and the silanol group on the surface of the undercoat layer are subjected to dealcoholation reaction without conducting any particular heat treatment to thereby couple the organosilane with the undercoat layer through a siloxane bond. Also, when the organosilane contains a hydrolyzable functional group having a high reactivity, for example, when the organosilane contains a chloro group, an isocyanate group, an acyloxy group, etc., the hydrolyzable functional group is reacted with silanol or a trace amount of water which may be present together with the alkoxyl group on the surface of the undercoat layer, thereby forming a bond between the undercoat layer and the organosilane. Therefore, the organosilane may be applied on the undercoat layer directly without being diluted or in the form of a dilute solution prepared by diluting the organosilane merely with a non-aqueous solvent such as perfluorocarbon, methylene chloride, hydrocarbons and silicone. Thus, when the undercoat layer is formed from such a silica-based film on the surface of which residual alkoxyl groups are present, the resultant water-repellent layer can firmly adhere onto the base material.
The method of applying the water-repellent layer coating solution is not particularly limited similarly to the method for applying the undercoat layer coating solution, and the water-repellent layer coating solution may be applied by various methods such as flow coating, roll coating, spray coating, hand coating and brush coating.

The method of improving an operability of a wiper on a surface of glass includes (1) a method of reducing a dynamic coefficient of friction between the glass and the wiper, and (2) a method of decreasing an absolute value of the difference in dynamic coefficient of friction between the place where water droplets are present (wetted place) and the place where no water droplets are present (dried place). Usually, since the surface of the glass has a hydrophilic property, water placed on the surface of the glass forms a water film. Therefore, it is considered that the method (2) is not effective to improve the operability of the wiper on the glass having no water-repellent film. However, since water placed on the surface of the glass having a water-repellent film is kept in the form of water droplets without being spread around, it is considered that the method (2) is effective to improve the operability of the wiper thereon.
In the present invention, the requirements for the above methods (1) and (2) can be achieved by controlling a surface roughness (Ra) of the water-repellent film to more than 0.5 nm but not more than 3.0 nm (0.5 < Ra ≤ 3.0 nm). When the surface roughness (Ra) lies within the above-specified range, as the surface roughness (Ra) increases, the effect of improving the operability of the wiper becomes larger. In addition, in general, as the surface roughness (Ra) increases, the tumbling angle becomes larger. From these viewpoints, the lower limit of the surface roughness (Ra) of the water-repellent film is preferably 0.6 nm or larger and more preferably 0.7 nm or larger. Whereas, the upper limit of the surface roughness (Ra) of the water-repellent film is preferably 2.4 nm or smaller, more preferably 1.5 nm or smaller and still more preferably 1.3 nm or smaller.

It is suggested that the relationship between the surface roughness (Ra) and the coefficient of friction of the water-repellent film is influenced by a contact area between the film and the wiper rubber.
The surface roughness (Ra) of the water-repellent film formed on the surface of the glass according to the present invention is several nm or smaller as described above. Thus, in the case where the water-repellent film having such an extremely high smoothness is contacted with the other material such as, for example, the wiper rubber, under a dried condition, the contact area between the film and the wiper rubber becomes large. Therefore, when the surface roughness (Ra) is in the range of several nanometers, it is suggested that as the surface roughness (Ra) is reduced, the dynamic coefficient of friction between the water-repellent film and the wiper rubber becomes larger.
On the other hand, in the case where the water-repellent film is contacted with the other material such as, for example, the wiper rubber, under a wetted condition, it is considered that water is penetrated between the water-repellent film and the wiper rubber so that the direct contact area between the water-repellent film and the wiper rubber is narrowed by the penetrated water. Further, since the penetrated water acts as fluid lubrication, it is suggested that the dynamic coefficient of friction between the water-repellent film and the wiper rubber under the wetted condition is lowered as compared to that under the dried condition.
Under the wetted condition, it is considered that the resistance due to friction force is reduced by the above water acting as fluid lubrication. Therefore, it is suggested that the change in dynamic coefficient of friction relative to the surface roughness under the wetted condition is lessened as compared to that under the dried condition.
In consequence, it is suggested that the absolute value of the difference in dynamic coefficient of friction between the dried condition and the wetted condition is increased as the surface roughness is reduced.
Upon the actual rainfall, when the amount of falling rain is relatively small, it is considered that a much-water portion and a less-water portion are present between the water-repellent film and the wiper rubber. In the much-water portion kept in a state close to the above wetted condition, the dynamic coefficient of friction becomes small. Whereas, in the less-water portion kept in a state close to the above dried condition, the dynamic coefficient of friction becomes large. Thus, it is suggested that the operability of the wiper on the water-repellent film is deteriorated owing to variation of the dynamic coefficient of friction.

In view of the above facts, the water-repellent film coated article of the present invention is characterized in that the dynamic coefficient of friction between the surface of the water-repellent film and the wiper rubber under a dried condition is 0.5 or less and preferably 0.45 or less when allowing the wiper rubber to move at a velocity of 50 cm/min on the surface of the water-repellent film while contacting therewith. Further, the absolute value of the difference between the dynamic coefficient of friction between the surface of the water-repellent film and the wiper rubber under a dried condition, and that under a wetted condition, is preferably 0.1 or less as measured under the same conditions as described above. The dried condition used herein means such a condition in which both the water-repellent film and the wiper rubber are kept in a dried state. Whereas, the wetted condition used herein means such a condition in which a sufficient amount of water is retained near a boundary of a contact portion between the water-repellent film and the wiper rubber.

The surface roughness (Ra) and the dynamic coefficient of friction on the surface of the base material can be controlled to the above-specified ranges by adjusting the coating and drying conditions used for the one-coat type and two-coat type to specific ranges. More specifically, the above-specified surface roughness (Ra) and the above-specified dynamic coefficient of friction on the surface of the base material can be achieved by adjusting the respective coating and drying temperatures to the range of from 10 to 40°C and the absolute humidity to the range of from 4.5 x 10⁻³ to 18 x 10⁻³ kg/kg (DA) and more preferably by adjusting the respective coating and drying temperatures to the range of from 15 to 35°C and the absolute humidity to the range of from 5 x 10⁻³ to 12 x 10⁻³ kg/kg (DA).
Meanwhile, the absolute humidity used herein means such a humidity represented by a mass ratio of water vapor contained in air per 1 kg of dried air. In order to indicate that the absolute humidity is represented on the basis of 1 kg of the dried air, [kg/kg(DA)] is used as a unit thereof.

The dynamic coefficient of friction may be measured by various methods, and the method of measuring the dynamic coefficient of friction is not particularly limited. For example, the dynamic coefficient of friction between the water-repellent film formed on the surface of the water-repellent glass and the wiper rubber under the wetted and dried conditions may be measured by the following method.

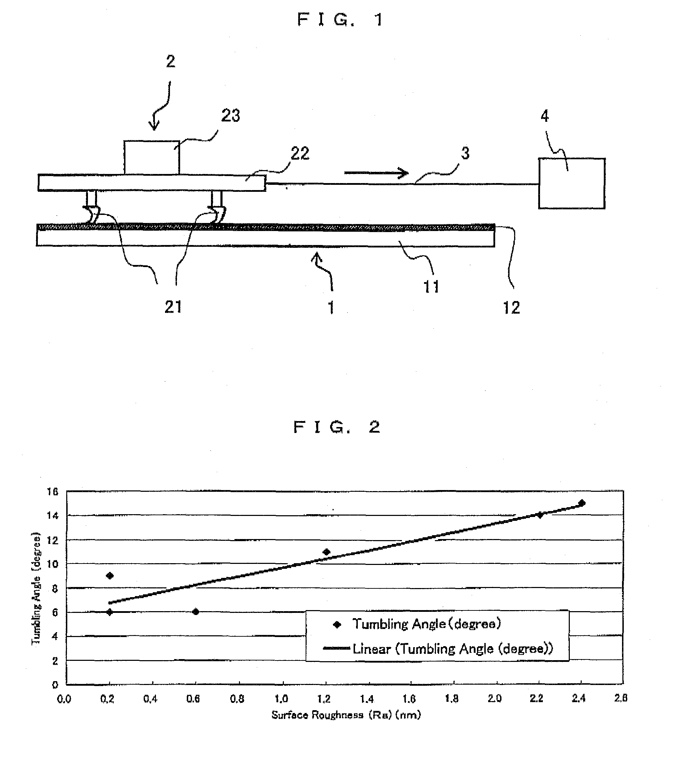

Fig. 1 shows a schematic view illustrating a measuring method using a flat glass plate. In Fig. 1, there is shown the method for measuring a dynamic coefficient of friction of a water-repellent film coated article (1) obtained by forming a water-repellent film (12) on a flat glass plate (11). In the followings, the specific example of the measuring method is explained. First, a wiper rubber probe (2) onto which wiper rubber elements (21) is attached is produced in the following manner. That is, two wiper rubber elements for a water-repellent glass (for example, automobile spare parts "Product Number 85214-22420" available from Toyota Jidosha KK) which are each cut into a length of 10 cm, are attached in parallel with each other at a distance of 10 cm near a center of a lower side surface of a plate member (22) having a size of 15 x 15 cm by using a double coated adhesive tape. The reason for arranging the two wiper rubber elements in parallel with each other is to stabilize the wiper rubber probe (2). Then, a weight (23) is rested on a central portion of an upper side surface of the plate member (22) such as, for example, a glass plate, such that a total load including not only the weight (23) but also the plate member and the wiper rubber elements is 400 g (20 gf/cm). The wiper rubber elements usually each have a triangular shape at a tip end thereof and exhibits a flexibility, and it may be therefore difficult to accurately measure a contact area between the respective wiper rubber elements (21) and the water-repellent film (12). In such a case, a contact length of the wiper rubber element contacted with the water-repellent film can be effectively used in place of the contact area thereof to express the force applied onto the wiper rubber elements as a weight applied to a unit length of the wiper rubber elements.

Upon measuring the dynamic coefficient of friction under a dried condition, the wiper rubber probe (2) produced above is rested on the water-repellent film (12) formed on the surface of the water-repellent film coated article (water-repellent glass plate) (1) having a size of 30 x 30 cm, and coupled to a measuring device (4) through a traction member (3). Then, the wiper rubber probe is horizontally pulled at a velocity of 50 cm/min in the direction perpendicular to the length direction of the wiper rubber element (21). While pulling the wiper rubber probe (2), the tension force applied is measured by an autograph "DSS-10T" available from Shimadzu Seisakusho Co., Ltd., as the measuring device (4). The dynamic coefficient of friction (total load/tension force) under a dried condition is determined from the measured value at which the tension force is stabilized.

Next, upon measuring the dynamic coefficient of friction under a wetted condition, a sufficient amount of water droplets are sprayed using a sprayer (not shown) over the water-repellent film (12). Then, the wiper rubber probe (2) is rested on the water-repellent film (12) and pulled while spraying water thereover on the side of the traveling direction of the respective wiper rubber elements to measure the dynamic coefficient of friction under the condition in which a sufficient amount of water is retained in a contact portion between the wiper rubber elements (21) and the water-repellent film (12). The other conditions used in the above measurement under the wetted condition are the same as those used under the dried conditions.

Although the measurement of the dynamic coefficient of friction of the water-repellent film coated article obtained by forming the water-repellent film on the flat glass plate is explained above, an automobile window glass is generally formed from a curved glass plate. The shape and hardness of the wiper rubber are designed such that the wiper rubber is contacted with the surface of such a curved glass plate without clearance therebetween.

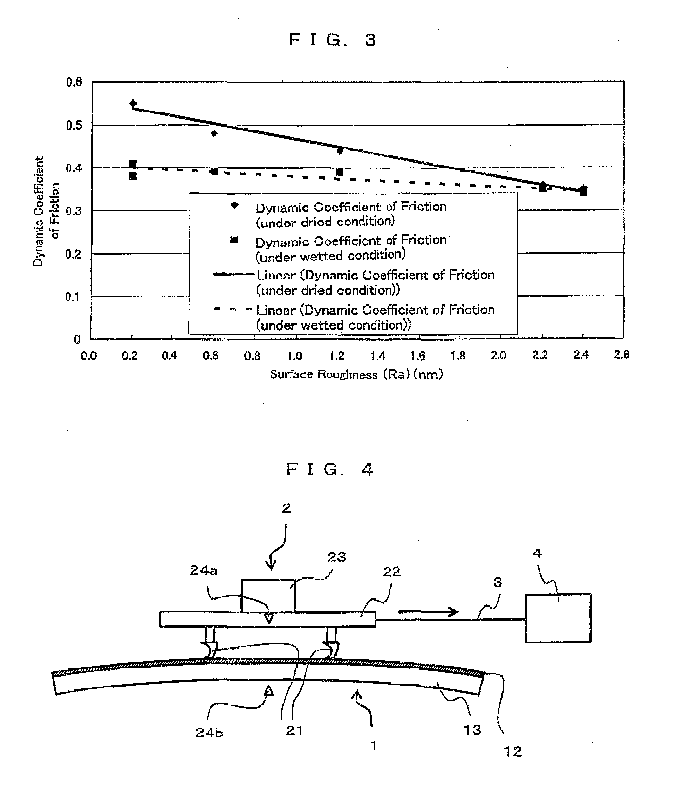

Fig. 4 shows a schematic view explaining the method of measuring a dynamic coefficient of friction of a water-repellent film coated article (1) obtained by forming a water-repellent film (12) on the curved glass plate (13).
The curved glass plate (13) is rested on a support table (not shown) such that a position to be measured on the glass plate (measuring point) is located at an apex thereof, and a measuring device (4) is arranged such that a traction member is disposed in a horizontal direction. The position at which the apex of the water-repellent film coated article (1) is recognized (for example, a side face of the support table) as well as the position of the wiper rubber probe corresponding to the apex (for example, a side face of the plate member (22)) are respectively provided with markings (center marks) (24). As shown in Fig. 4, by using, for example, triangular marks whose apexes are faced with each other as the center marks (24), the apex positions can be easily recognized.
Then, the wiper rubber probe (2) is pulled from the position remoter from the measuring device (4) than the apex position to the position nearer to the measuring device (4) than the apex position to conduct the measurement. The judgement of whether the wiper rubber probe (2) reaches the apex position is made by confirming that the two center marks come into alignment with each other. When a distance from the position at which pulling of the wiper rubber probe is initiated to the apex position is measured and compared with the result of tension force measured by the measuring device (4), the measurement result when the wiper rubber probe (2) reaches the apex position is determined, whereby the dynamic coefficient of friction can be calculated from the measurement result.
Thus, when the dynamic coefficient of friction at the apex position of the water-repellent film coated article (1) is determined by the above method, it is possible to measure the dynamic coefficient of friction of even the curved water-repellent film coated article.

### EXAMPLES

The present invention is described in more detail below by referring to the following examples. However, these examples are only illustrative and not intended to limit the invention thereto.
Various properties of the water-repellent film coated articles obtained in the following Examples and Comparative Examples were measured by the following methods.

### [Measuring Methods]

### (Procedure 1)

According to the following "measuring method 1" and "measuring method 2", a contact angle and a tumbling angle on the surface of the water-repellent film were measured.

### (Procedure 2)

The surface of the obtained water-repellent glass was rubbed 10 times with Bencot ("LINTFREE AZ-8" available from Asahi Kasei Co., Ltd.) impregnated with 2 mL of ethanol, and then wiped with a fresh dry Bencot 10 times. The thus treated water-repellent glass was subjected to measurement of a contact angle and a tumbling angle on a surface thereof.

### (Procedure 3)

The procedure 2 was repeated until the measured value was stabilized as compared to the previous measurement result. The repeated procedure aimed at removal of dirt or smears and a surplus water-repellent agent on the surface of the water-repellent film.

### (Procedure 4)

When the contact angle and the tumbling angle were stabilized, the surface roughness and the dynamic coefficient of friction were measured according to the following "measuring method 3" and "measuring method 4".
The respective measured values obtained by the above procedures were regarded as initial measured values.

### (Measuring Method 1): Measurement of Contact Angle

The contact angle of 3 µL of water droplets was measured by a static droplet method by using a contact angle measuring apparatus "CA-V150 Model" available from Kyowa Kaimen Kagaku Co., Ltd. The larger the contact angle, the more excellent the static water repellency becomes.

### (Measuring Method 2): Measurement of Tumbling Angle

The tumbling angle was used as a scale for indicating a capability of allowing water droplets to roll down on the surface of the water-repellent glass plate. The method for measuring the tumbling angle is described later. The tumbling angle was measured by placing a water droplet having a diameter of 5 mm on the surface of the water-repellent glass plate disposed horizontally and gradually inclining the water-repellent glass plate. The inclination angle of the glass plate at which the water droplet placed on the surface thereof started to roll down thereon was determined as the tumbling angle of water droplet. The smaller the tumbling angle, the more excellent the dynamic water repellency becomes. For example, the small tumbling angle means that rain droplets attached on a windshield glass of an automobile during running are easily scattered around and, therefore, a field of view of a driver is not disturbed by the rain droplets.

### (Measuring Method 3): Measurement of Surface Roughness (Ra)

Using an atomic force microscope "SPI3700" available from S.I.I. Nanotechnology Corp., a surface shape of a sample was measured under a cyclic contact mode to calculate an arithmetic mean roughness (Ra) thereof. Upon the measurement, a cantilever "SI-DF20" made of silicon was used; the measured area of the sample was a square of 1 µm x 1 µm; the number of measuring points was 512 x 256; and the scanning speed was 1.02 Hz, and further the low-pass filter correction and the leveling correction of the measured data were made to calculate the arithmetic mean roughness (Ra). Meanwhile, upon the leveling correction of the measured data, fitting was made on the basis of a curved surface determined according to least square approximation, gradient of the data was corrected, and further distortion in the Z-axis direction was removed.

### (Measuring Method 4): Measurement of Dynamic Coefficient of Friction

According to the method using a flat glass plate on which a water-repellent film was formed as described in the present specification, the dynamic coefficient of friction of the water-repellent glass was measured. Meanwhile, as a wiper rubber for the water-repellent glass, there was used an automobile spare part "Product Number 85214-22420" available from Toyota Jidosha KK.

### EXAMPLE 1

To 97.38 g of ethanol (water content: 0.35% by mass) were added 0.6 g of tetraethoxysilane (available from Shin-Etsu Silicone Co., Ltd.) as the silicon alkoxide and 0.02 g of heptadecafluorodecyl trimethoxysilane (CF₃(CF₃)₇(CH₂)₂Si(OCH₃)₃; available from Shin-Etsu Silicone Co., Ltd.) as the organosilane containing a fluoroalkyl group, and the resultant mixture was stirred for 30 min. Next, while stirring the mixture, 2.0 g of a concentrated hydrochloric acid (concentration: 35% by mass; available from Kanto Kagaku Co., Ltd.) was added thereto to obtain a water-repellent coating solution. Water was contained mainly in ethanol and the concentrated hydrochloric acid, and a total amount of water contained was 1.64 g. Therefore, the water content in the obtained water-repellent coating solution was 1.64% by mass. Also, the concentration of the hydrochloric acid in the coating solution corresponded to 0.15 N. In addition, the amount of tetraethoxysilane contained in the water-repellent coating solution was 0.173% by mass in terms of silica, and the amount of heptadecafluorodecyl trimethoxysilane contained in the water-repellent coating solution was 0.0021% by mass in terms of silica.
The thus obtained water-repellent coating solution was applied onto the surface of a cleaned glass substrate at 20°C and 35% RH by a flow coating method. The absolute humidity under the above conditions was 5.1 x 10⁻³ kg/kg (DA). The resultant water-repellent film was dried for about 30 min under the same conditions as described above, thereby obtaining a water-repellent film coated glass plate. The thus obtained water-repellent film coated glass plate was subjected to measurements by using the above evaluation methods. The results of the measurements are shown in Table 1.

### EXAMPLES 2 AND 3

The same procedure as in Example 1, was repeated except that the relative humidity used upon applying the water-repellent coating solution in Example 1 was changed as shown in Table 1, thereby obtaining a water-repellent film coated glass plate. The thus obtained water-repellent film coated glass plate was subjected to measurements in the same manner as in Example 1. The results of the measurements are shown in Table 1.

### COMPARATIVE EXAMPLE 1

The same procedure as in Example 1 was repeated except that the relative humidity used upon applying the water-repellent coating solution in Example 1 was changed to 15% RH, thereby obtaining a water-repellent film coated glass plate. The thus obtained water-repellent film coated glass plate was subjected to measurements in the same manner as in Example 1. The results of the measurements are shown in Table 1.

### EXAMPLE 4

To 97.4 g of ethanol (water content: 0.35% by mass) was added 0.6 g of tetraethoxysilane (available from Shin-Etsu Silicone Co., Ltd.) as the silicon alkoxide, and the resultant mixture was stirred for 30 min. Next, while stirring the mixture, 2.0 g of a concentrated hydrochloric acid (concentration: 35% by mass; available from Kanto Kagaku Co., Ltd.) was added thereto to obtain an undercoat layer coating solution. Water was contained mainly in ethanol and the concentrated hydrochloric acid, and a total amount of water contained was 1.64 g. Therefore, the water content in the undercoat layer coating solution was 1.64% by mass. Also, the concentration of the hydrochloric acid in the coating solution corresponded to 0.15 N. In addition, the amount of tetraethoxysilane contained in the undercoat layer coating solution was 0.173% by mass in terms of silica.

Next, 1.0 g of heptadecafluorodecyl trimethoxysilane (available from Shin-Etsu Silicone Co., Ltd.) as the organosilane containing a fluoroalkyl group was dissolved in 98 g of ethanol (water content: 0.35% by mass), and then 1.0 g of 0.1 N hydrochloric acid was added to the resultant solution, followed by stirring the obtained solution for 1 h, thereby obtaining a water-repellent layer coating solution. The water content in the water-repellent layer coating solution was 1.34% by mass. In addition, the amount of heptadecafluorodecyl trimethoxysilane contained in the water-repellent layer coating solution was 0.11% by mass in terms of silica.
The above-prepared undercoat layer coating solution was applied onto the surface of a cleaned glass substrate at 20°C and 55% RH by a flow coating method. The absolute humidity under the above conditions was 8.1 x 10⁻³ kg/kg (DA). The resultant undercoat layer was dried for about 30 min under the same conditions as described above, thereby forming a silica film as an undercoat layer on the surface of the glass plate. Next, 3 mL of the above-prepared water-repellent layer coating solution was impregnated into a cotton cloth and applied to the silica film formed on the surface of the glass substrate. Then, an excessive amount of the water-repellent layer coating solution applied was wiped off with a fresh cotton cloth, thereby obtaining a water-repellent film coated glass plate. The thus obtained water-repellent film coated glass plate was subjected to measurements in the same manner as in Example 1. The results of the measurements are shown in Table 1.

### COMPARATIVE EXAMPLE 2

The same procedure as in Example 4 was repeated except that the relative humidity as the condition used upon applying the undercoat layer coating solution and the water-repellent layer coating solution was changed to 15% RH, thereby obtaining a water-repellent film coated glass plate. The absolute humidity under the above condition was 2.2 x 10⁻³ kg/kg (DA). The thus obtained water-repellent film coated glass plate was subjected to measurements in the same manner as in Example 1. The results of the measurements are shown in Table 1.

**TABLE 1-1**

| | Conditions | | | |
|---|---|---|---|---|
| | Frequency of coating (times) | Temperature (°C) | Relative humidity (% RH) | Absolute temperature x 10⁻³ (kg/kg (DA)) |
| Example 1 | 1 | 20 | 35 | 5.1 |
| Example 2 | 1 | 20 | 40 | 5.9 |
| Example 3 | 1 | 20 | 55 | 8.1 |
| Example 4 | 2 | 20 | 55 | 8.1 |
| Comparative Example 1 | 1 | 20 | 15 | 2.2 |
| Comparative Example 2 | 2 | 20 | 15 | 2.2 |

**TABLE 1-2**

| | Measured values in initial conditions | | |
|---|---|---|---|
| | Surface roughness (Ra) (nm) | Contact angle (°) | Tumbling angle (°) |
| Example 1 | 0.6 | 108 | 6 |
| Example 2 | 1.2 | 111 | 11 |
| Example 3 | 2.2 | 113 | 14 |
| Example 4 | 2.4 | 110 | 15 |
| Comparative Example 1 | 0.2 | 100 | 9 |
| Comparative Example 2 | 0.2 | 109 | 6 |

**TABLE 1-3**

| | Measured values in initial conditions | | |
|---|---|---|---|
| | Dynamic coefficient of friction (under dried condition) | Dynamic coefficient of friction (under wetted condition) | Difference in dynamic coefficient of friction |
| Example 1 | 0.48 | 0.39 | 0.09 |
| Example 2 | 0.44 | 0.39 | 0.05 |
| Example 3 | 0.36 | 0.35 | 0.01 |
| Example 4 | 0.35 | 0.34 | 0.01 |
| Comparative Example 1 | 0.55 | 0.41 | 0.14 |
| Comparative Example 2 | 0.55 | 0.38 | 0.17 |

### [Comparison of Measurement Results]

The results of the measurements under initial conditions of the water-repellent film coated articles obtained in Examples and Comparative Examples as shown in Table 1 were compared with each other.
The water-repellent film coated articles obtained in Examples 1 to 3 and Comparative Example 1 were of one-coat type in which the water-repellent film having a two-layer structure was formed by one coating step. Whereas, the water-repellent film coated articles obtained in Example 4 and Comparative Example 2 were of a two-coat type in which the water-repellent film having a two-layer structure was formed by two coating steps. In any type of the above water-repellent film coated articles, since the respective water-repellent films had the same two-layer structure made of the same material, the results of measurements for the water-repellent film coated articles of Examples 3 and 4 which were produced under the same temperature and humidity conditions were substantially identical in measured values to each other. Similarly, the results of measurements for the water-repellent film coated articles of Comparative Examples 1 and 2 were also substantially identical in measured values to each other.

### (Comparison of Water Repellency)

The contact angles as a general scale of a water repellency of the water-repellent films obtained in Examples 1 to 4 were in the range of from 108 to 113°, whereas the contact angles of the water-repellent films obtained in Comparative Examples 1 and 2 were in the range of from 100 to 109°. As a result, it was confirmed that the water-repellent film coated articles obtained in Examples 1 to 4 had a sufficient water repellency.
When using the water-repellent film coated articles as a windshield for automobiles, the users of automobiles more strongly sense a water repellency by the tumbling angle rather than by the contact angle. This is because in many cases, the users of automobiles wish for allowing water droplets to roll down or blow off by a wind pressure without being attached onto the surface of the glass. The mounting angle of the windshield is usually in the range of from about 30 to 80° relative to a horizontal plane although it varies depending upon the kinds of automobiles. In the embodiments of the present invention, the tumbling angles in Examples 1 to 4 were in the range of from 6 to 15°, and the tumbling angles in Comparative Examples 1 and 2 were 6° and 9°, respectively. Therefore, when comparing these tumbling angles with the mounting angle of the windshield, it was confirmed that the water-repellent film coated articles of the present invention had a sufficient water repellency.
In Fig. 2, there is shown the relationship between the surface roughness and tumbling angle as the measurement results shown in Table 1. In Fig. 2, the measured values are respectively represented by rhombus-shape marks, and the solid line represents a line of linear approximation obtained from the measured values by a least square method. The line of linear approximation is used for indicating a trend of the graph. From the graph, it was confirmed that the tumbling angle was decreased as the surface roughness became finer.

### (Comparison of Dynamic Coefficient of Friction)

In Fig. 3, there is shown the relationship between the surface roughness and dynamic coefficient of friction as the measurement results shown in Table 1. In Fig. 3, the dynamic coefficient of friction as measured under a dried condition is represented by a rhombus-shaped mark, whereas the dynamic coefficient of friction as measured under a dried condition is represented by a square-shaped mark. Also, in Fig. 3, the solid line represents a line of linear approximation obtained by a least square method which shows the relationship between the surface roughness and dynamic coefficient of friction under a dried condition, whereas the broken line represents a line of linear approximation obtained by a least square method which shows the relationship between the surface roughness and dynamic coefficient of friction under a wetted condition. These lines of linear approximation are used for indicating a trend of the respective graphs.
When comparing the graphs under the dried and wetted conditions with each other, it was confirmed that the line of linear approximation under a wetted condition was smaller in absolute value of its gradient than that under a dried condition. As described above, this indicates that under the wetted condition, water acting as fluid lubrication serves for reducing a resistance due to friction force. It is considered that the difference in dynamic coefficient of friction between the small-surface roughness portion and large-surface roughness portion is lessened by the function of water acting as fluid lubrication.
From the line of linear approximation under a dried condition, it was confirmed that the dynamic coefficient of friction in a coarse region having a surface roughness of 0.5 nm or more was about 0.5 or less, and the absolute value of the difference between the dynamic coefficient of friction under the dried condition and that under the wetted condition was about 0.1. Further, it was confirmed that when the surface roughness was 2.2 nm and 2.4 nm, the absolute value of the difference between the dynamic coefficient of friction under the dried condition and that under the wetted condition was 0.01, namely, it was considered that there was substantially no difference between the dynamic coefficient of friction under the dried condition and that under the wetted condition.

In the water-repellent film coated articles, the surface roughness of the water-repellent film thereof may be appropriately selected according to conditions of use of the water-repellent film coated articles in view of the water repellency and dynamic coefficient of friction as described above. For example, when the setting angle of the water-repellent film coated articles is close to a horizontal plane, the surface roughness may be adjusted such that the tumbling angle becomes small in such a range of the dynamic coefficient of friction in which the uses do not mind judder of the wiper rubber. On the other hand, when the setting angle of the water-repellent film coated articles is close to a vertical plane, since it is not necessary to consider the difference in tumbling angle, the surface roughness may be adjusted such that the absolute value of the difference between the dynamic coefficient of friction under the dried condition and that under the wetted condition becomes small, thereby further improving occurrence of judder of the wiper rubber.

### INDUSTRIAL APPLICABILITY

In accordance with the present invention, there is provided a water-repellent film coated article having excellent water repellency and durability which is further excellent in operability of a wiper on the surface of a film formed thereon and suppresses occurrence of judder of the wiper. Further, there is provided a process for producing the water-repellent film coated article with an excellent productivity substantially without requiring any baking step.

## Claims

1. A water-repellent film coated article comprising a base material and a water-repellent film formed on a surface of the base material, wherein the water-repellent film is made mainly of silicon oxide and has an arithmetic mean roughness (Ra) of more than 0.5 nm but not more than 3.0 nm (0.5 nm < Ra ≤ 3.0 nm) as measured on a surface thereof.

2. The water-repellent film coated article according to claim 1, wherein a dynamic coefficient of friction between the surface of the water-repellent film and a wiper rubber under a dried condition is 0.5 or less when allowing the wiper rubber to move at a velocity of 50 cm/min on the surface of the water-repellent film while contacting therewith.

3. The water-repellent film coated article according to claim 1 or 2, wherein an absolute value of a difference between the dynamic coefficient of friction between the surface of the water-repellent film and the wiper rubber under a dried condition and that under a wetted condition is 0.1 or less when allowing the wiper rubber to move at a velocity of 50 cm/min on the surface of the water-repellent film while contacting therewith.

4. The water-repellent film coated article according to any one of claims 1 to 3, wherein the water-repellent film contains an organosilane.

5. The water-repellent film coated article according to any one of claim 1 to 4, wherein the water-repellent film contains a fluoroalkyl group-containing compound.

6. The water-repellent film coated article according to claim 5, wherein a concentration of fluorine in the surface of the water-repellent film is 0.8 or more in terms of an atomic ratio of fluorine atom to silicon atom therein.

7. The water-repellent film coated article according to claim 5 or 6, wherein the water-repellent film is formed by applying a coating solution comprising (A) 0.01 to 2% by mass (in terms of silica) of silicon alkoxide and/or a hydrolyzate thereof, (B) 0.00001 to 0-15% by mass (in terms of silica) of a fluoroalkyl group-containing silane compound, (C) 0.001 to 3 N of an acid and (D) 0 to 20% by mass of water, onto the surface of the base material, and then drying the applied coating solution.

8. The water-repellent film coated article according to claim 5 or 6, wherein the water-repellent film is formed by applying a coating solution prepared by dissolving (E) a chlorosilyl group-containing compound and (B) a fluoroalkyl group-containing silane compound in a solvent containing (F) alcohol and/or water to replace a chloro group of the chlorosilyl group-containing compound with an alkoxyl group or a hydroxyl group, onto the surface of the base material, and then drying the applied coating solution.

9. The water-repellent film coated article according to any one of claims 4 to 6, wherein the water-repellent film comprises an undercoat layer formed by applying an undercoat layer coating solution containing (A) 0.01 to 3% by mass (in terms of silica) of silicon alkoxide and/or a hydrolyzate thereof, (C) 0.001 to 1 N of an acid and (D) 0 to 10% by mass of water, on the surface of the base material and then drying the applied undercoat layer coating solution, and a water-repellent layer formed by applying a water-repellent layer coating solution containing a fluoroalkyl group and/or a hydrolyzable group-containing organosilane, onto a surface of the undercoat layer and then drying the applied water-repellent layer coating solution.

10. The water-repellent film coated article according to any one of claims 5 to 9, wherein the water-repellent film comprises the undercoat layer made mainly of silicon oxide and the water-repellent layer containing the fluoroalkyl group-containing silane.

11. The water-repellent film coated article according to any one of claims 4 to 9, wherein the water-repellent film comprises the undercoat layer made mainly of silicon oxide and the water-repellent layer containing the hydrolyzable group-cantaining organosilane.

12. The water-repellent film coated article according to claim 10 or 11, wherein the water-repellent layer is coupled to the undercoat layer.

13. A process for producing a water-repellent film coated article comprising the steps of:
applying a coating solution comprising (A) 0.01 to 2% by mass (in terms of silica) of silicon alkoxide and/or a hydrolyzate thereof, (B) 0.00001 to 0.15% by mass (in terms of silica) of a fluoroalkyl group-containing silane compound, (C) 0.001 to 3 N of an acid and (D) 0 to 20% by mass of water, or a coating solution prepared by dissolving (E) a chlorosilyl group-containing compound and (B) the fluoroalkyl group-containing silane compound in a solvent containing (F) alcohol and/or water to replace a chloro group of the chlorosilyl group-containing compound with an alkoxyl group or a hydroxyl group, onto a base material at a temperature of from 10 to 40°C and an absolute humidity of from 4.5 x 10⁻³ to 18 x 10⁻³ kg/kg (DA); and
drying the applied coating solution at a temperature of from 10 to 40°C and an absolute humidity of from 4.5 x 10⁻³ to 18 x 10⁻³ kg/kg (DA).

14. A process for producing a water-repellent film coated article comprising the steps of:
applying an undercoat layer coating solution containing (A) 0.01 to 3% by mass (in terms of silica) of silicon alkoxide and/or a hydrolyzate thereof, (C) 0.001 to 1 N of an acid and (D) 0 to 10% by mass of water, on a base material at a temperature of from 10 to 40°C and an absolute humidity of from 4.5 x 10⁻³ to 18 x 10⁻³ kg/kg (DA); and
drying the applied undercoat layer coating solution at a temperature of from 10 to 40°C and an absolute humidity of from 4.5 x 10⁻³ to 18 x 10⁻³ kg/kg (DA) to form an undercoat layer.
